# EUROPÄISCHE PATENTSCHRIFT

(11) **EP 1 879 770 B1**
(45) Veröffentlichungstag und Bekanntmachung des Hinweises auf die Patenterteilung: **14.09.2011**
(21) Anmeldenummer: 06725657.8
(22) Anmeldetag: 07.04.2006
(51) Int. Cl.: B60R 11/02, F16M 13/02

(54) **HALTEVORRICHTUNG ZUR BEFESTIGUNG EINER ANZEIGEEINHEIT, ANZEIGEEINHEIT UND ANZEIGEVORRICHTUNG**
HOLDING DEVICE FOR FASTENING A DISPLAY UNIT, DISPLAY UNIT AND DISPLAY DEVICE
DISPOSITIF DE RETENUE POUR LA FIXATION D'UNE UNITE D'AFFICHAGE, UNITE D'AFFICHAGE ET DISPOSITIF D'AFFICHAGE

(30) Priorität: 04.05.2005 DE 102005021393
(43) Veröffentlichungstag der Anmeldung: 23.01.2008
(73) Patentinhaber: Robert Bosch GmbH, 70442 Stuttgart (DE)
(72) Erfinder: ROEHL, Martin, 31139 Hildesheim (DE)
(86) Internationale Anmeldenummer: PCT/EP2006/061453
(87) Internationale Veröffentlichungsnummer: WO 2006/117276

(56) Entgegenhaltungen:
- WO-A-01/97501
- WO-A1-2006/095379
- US-A1- 2003 213 884
- US-A1- 2005 097 706

## Beschreibung

### Stand der Technik

Die Erfindung geht von einer Anzeigevorrichtung, einer Anzeigeeinheit und einer Konsole zur Befestigung einer Anzeigeeinheit nach der Gattung der unabhängigen Patentansprüche aus.

In Reisebussen, die mit einer Videoanlage ausgestattet sind, werden häufig LCD- (= engl. liquid cristal display = Flüssigkristall-Anzeige)- Monitore installiert, die mit einer Schwenkvorrichtung automatisch aus- und eingeklappt werden können. Die Schwenkvorrichtung wird in einer Halterung gehalten, welche die Montage der Einheit aus Schwenkvorrichtung und Monitor beispielsweise an einer Dachkonstruktion eines Reisebusses ermöglicht. Bei herkömmlichen Anzeigevorrichtungen dieser Art bilden Monitor bzw. Anzeigeeinheit, die Schwenkvorrichtung bzw. Schwenkmechanik und die Halterung eine bauliche Einheit, die zusammen im Fahrzeug eingebaut wird.

Dies hat den Nachteil, dass Ein- und Ausbau der Anzeigevorrichtung durch deren hohes Gewicht erschwert ist. Da die Halterung an einem stabilen Element, insbesondere Stahlelementen der Dachkonstruktion beispielsweise eines Reisebusses, montiert wird, erfolgt der Einbau der gesamten Anzeigevorrichtung in schmutziger Umgebung. Dadurch besteht für die eigentliche, empfindliche Anzeigeeinheit, also insbesondere das LC-Display, die Gefahr der Verschmutzung und der Beschädigung. Da die Dachverkleidung erst nach Montage der Halterung erfolgt, muss diese später für den Fall, dass Arbeiten an der Anzeigevorrichtung erforderlich werden, die einen Ausbau des Monitors erfordern, demontiert werden. Zu diesem Zweck zeigt US2003213884 eine Vorrichtung mit einer Anzeigeeinheit und einer Halterung, die getrennt werden können.

### Vorteile der Erfindung

Die Erfindung mit den Merkmalen der unabhängigen Patentansprüche hat den Vorteil, dass Anzeigeeinheit und Halterung auf einfache Art und Weise getrennt werden. Diese Trennung hat wiederum den Vorteil, dass die Montage der Anzeigevorrichtung und erforderlichenfalls auch eine spätere Demontage der Anzeigeeinheit oder der gesamten Anzeigevorrichtung erleichtert wird. Insbesondere wird dies dadurch erreicht, dass die Halterung zur Aufnahme des Monitors bzw. der Anzeigeeinheit getrennt von derselben montiert und der Monitor zu einem späteren Zeitpunkt in der Halterung befestigt werden kann.

Erfindungsgemäß ist dazu vorgesehen eine Haltevorrichtung zum Einbau der Anzeigeeinheit vorgesehen, mit einem Halteelement und mit mit dem Halteelement verbundenen Aufnahmeelementen, welche im wesentlichen keil- oder V-förmige Aussparungen aufweisen, die zur Aufnahme von entsprechend keilförmig ausgebildeten Achsenabschnitten der Anzeigeeinheit dienen. Dies ermöglicht auch nach mehreren Ein-und/oder Ausbauzyklen eine spiel- und damit klapperfreie Montage der Anzeigeeinheit.

Vorteilhaft weist die Haltevorrichtung schwenkbar gelagerte Spannhebel zum Verspannen der Achsenabschnitte in den Aussparungen durch Ausüben einer Kraft auf die Achsenabschnitte im Wesentlichen in Richtung der Verjüngung der keilförmigen Aussparungen auf. Hierdurch können ein eventuelles Spiel und/oder Toleranzen ausgeglichen werden.

Vorteilhaft weisen die Spannhebel angeordnete Rastfedern auf, die bei Zuklappen der Spannhebel in weiteren Aussparungen der Aufnahmeelemente der Haltevorrichtung verrasten. Hierdurch ist eine besonders schnelle und einfache Montage der Anzeigeeinheit möglich, dadurch, dass die Anzeigeeinheit durch einfaches Zuklappen der Spannhebel bereits fixiert wird.

Vorteilhaft sind zusätzliche Mittel zum Verspannen der Spannhebel vorgesehen. Diese können vorteilhaft als Spannschrauben ausgebildet sein und vorzugsweise den Spannhebel gegen das Halteelement der Haltevorrichtung verspannen. Hierdurch können ein eventuelles Spiel und/oder Toleranzen ausgeglichen werden.

Vorteilhaft sind ferner hakenförmige Fortsätze der Spannhebel an deren ihrer Lagerung entgegengesetzten Enden zur vorübergehenden Halterung der Anzeigeeinheit, insbesondere für Montagezwecke.

### Zeichnungen

Ein besonders vorteilhaftes Ausführungsbeispiel der Erfindung ist in den Figuren dargestellt und wird nachfolgend näher erläutert. Gleiche Bezugszeichen in den Figuren kennzeichnen dabei gleiche Elemente.

### Es zeigen

Figur 1 eine Anzeigeeinheit und eine erfindungsgemäße Konsole zur Befestigung und Halterung der Anzeigeeinheit
Figur 2 einen Schnitt durch die Achse der Anzeigeeinheit sowie den für die Halterung der Anzeigeeinheit erheblichen Abschnitt der Konsole
Figur 3 Konsole und Anzeigeeinheit im zusammengefügten Zustand.

### Beschreibung der Ausführungsbeispiele

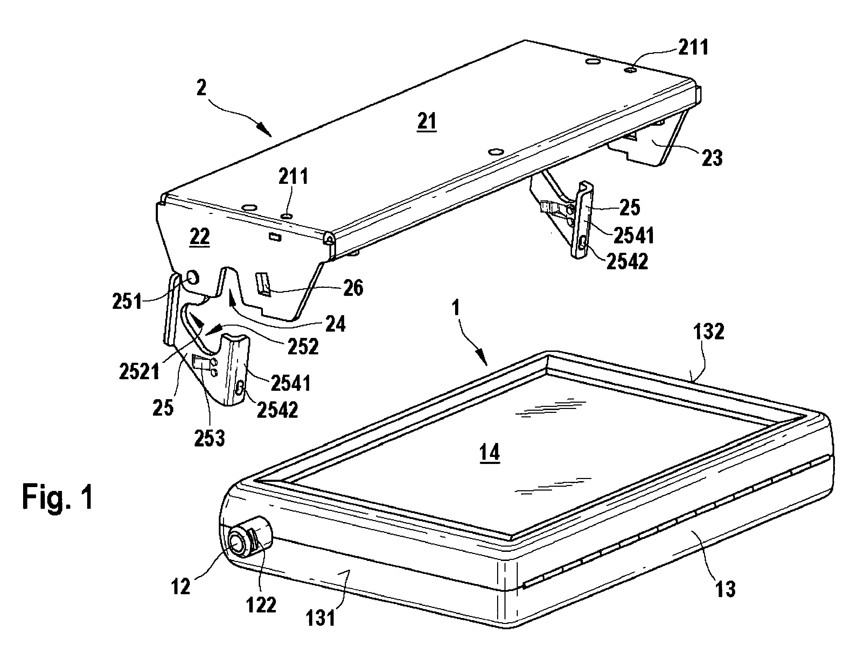

In Figur 1 sind eine Anzeigeeinheit 1 und eine Haltevorrichtung 2, nachfolgend auch Konsole 2, zur Aufnahme und Halterung der Anzeigeinheit 1 dargestellt.

Die Anzeigeeinheit 1 weist ein Gehäuse 13 auf, in welchem zum einen eine an sich bekannte Schwenkvorrichtung zum Verschwenken der gesamten Anzeigevorrichtung 1 angeordnet ist, und in der ferner das eigentliche Anzeigeelement 14, also beispielsweise das LC-Display oder ein TFT-Display oder ähnliches, angeordnet ist.

Die Schwenkvorrichtung ist mit einer Achse oder Achsenabschnitten verbunden. Diese ragen als Achsenabschnitte 12 seitlich auf einander gegenüber liegenden Seiten aus dem Gehäuse 13 heraus. Zum Verschwenken des Monitors 1 übt die Schwenkmechanik ein Drehmoment auf die Achse bzw. die Achsenabschnitte 12 aus, welches sich im Wesentlichen aus dem Gewicht der Anzeigeeinheit 1 und dem auf die Achsenabschnitte 12 wirkenden Hebelarm ergibt. Dieses Drehmoment muss durch die Haltevorrichtung 2 aufgenommen werden.

Die Haltevorrichtung 2 weist ein Halteelement 21 auf, das zur Befestigung der Haltevorrichtung 2 selbst beispielsweise an der Dachkonstruktion eines Reisebusses dient. Das Halteelement 21 ist bei dem in der Figur 1 dargestellten Ausführungsbeispiel als plattenförmiges Element ausgebildet. Alternative Ausprägungen sind aber ebenso möglich und liegen im Bereich der Erfindung.

Die Haltevorrichtung 2 weist weiterhin zwei Aufnahmeelemente 22 und 23 auf, die mit dem Halteelement 21 verbunden sind. Im vorliegenden Fall handelt es sich um ein Blechstanzteil, bei dem die Aufnahmeelemente 22 und 23 als von dem Halteelement 21 abgekantete Blechlaschen ausgebildet sind. Diese bilden mit dem Halteelement 21 jeweils einen rechten Winkel, so dass die Haltevorrichtung 2 insgesamt einen im wesentlichen U-förmigen Querschnitt aufweist derart, dass die Aufnahmeelemente 22 und 23 die Schenkel des "U", das Halteelement 21 den Boden des "U" bilden.

Bei den folgenden Betrachtungen wird davon ausgegangen, dass das Halteelement 21 an die Dachkonstruktion eines Reisebusses oder beispielsweise einer Bahn o.ä. verschraubt wird und die Aufnahmeelemente 22 und 23 in diesem montierten Zustand nach unten zeigen.

Die Aufnahmeelemente 22 und 23 weisen an ihren Unterkanten, also den dem Halteelement 21 abgewandten Kanten jeweils eine Aussparung 24 auf, wobei die Aussparungen 24 gleichartig ausgebildet sind. Die Aussparungen 24 sind nach unten, also zur Unterkante der Aufnahmeelemente 22 und 23 hin, offen (243).

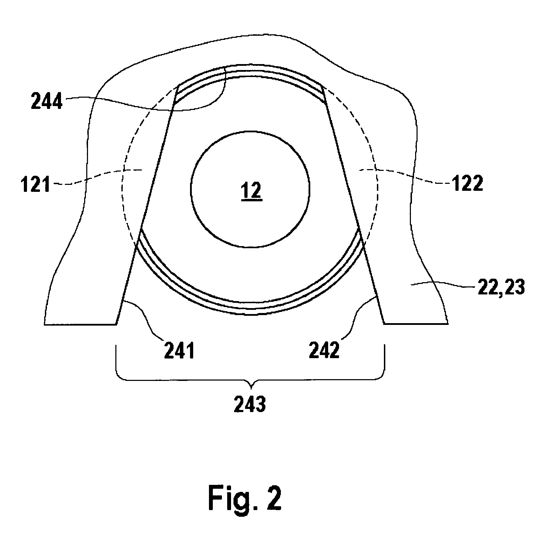

Die Aussparungen 24 (Figur 2) weisen die Aussparungen 24 begrenzende Anlagekanten 241 und 242 auf, die keil- oder V-förmig nach oben hin, also in Richtung auf das Halteelement 21, aufeinander zu laufen. Die Aussparungen 24 bilden also einen sich nach oben bzw. von seiner Öffnung 243 aus verjüngenden, durch die Anlagekanten 241 und 242 begrenzten Spalt. Dieser ist nach oben durch einen Kreisbogenabschnitt 244 begrenzt. Ein andersartiger Abschluss des Spaltes ist ebenso möglich.

Die beschriebenen Aussparungen 24 dienen der Aufnahme von Achsenabschnitten 12 der Anzeigeeinheit 1, die aus einander gegenüberliegenden Seitenflächen 131 und 132 eines Gehäuses 13 der Anzeigeeinheit 1 heraus ragen. Die Achsenabschnitte 12 weisen einen im Wesentlichen runden Querschnitt auf. Aus diesen sind zum Zwecke der Einbringung in die Aussparungen 24 der Haltevorrichtung 2 und zur verdrehsicheren Klemmung und Halterung der Achsenabschnitte 12 in den keilförmigen Aussparungen 24 der Aufnahmeelemente 22 und 23 der Haltevorrichtung 2 Nuten 121 und 122 herausgefräst oder anderweitig eingebracht, die in einem Winkel zueinander stehen, der dem Winkel der Anlagekanten 241 und 242 der keilförmigen Aussparungen 24 zueinander entspricht. Wesentlich ist hier, dass die Achsenabschnitte 12 Abschnitte bei denen gegenüberliegende Seitenflächen 121 und 122 der Achsenabschnitte 12 zueinander zumindest annähernd denselben Winkel aufweisen, wie die Anlagekanten 241 und 242 der Aussparungen 24. Diese Abschnitte müssen nicht notwendig als Nuten in den Achsenabschnitten ausgebildet sein. Diese Ausführungsform als Nuten hat aber den besonderen Vorteil, dass die Anzeigeeinheit 1 entlang der Achsenabschnitte 12 gegen ein seitliches Verschieben in den Aussparungen 24 gesichert ist.

Zur Montage der Anzeigeeinheit 1 werden deren rechts und links aus dem Gehäuse 13 herausragenden Achsenabschnitte 12 in die Aussparungen 24 der Haltevorrichtung 2 eingeschoben derart, dass die Nuten 121 und 122 bzw. entsprechend ausgebildeten Anlageflächen 121 und 122 parallel zu den korrespondierenden Anlagekanten 241 und 242 der Aussparungen 24 ausgerichtet sind. Die Achsenabschnitte 12 werden dabei soweit in Richtung der Verjüngung der Aussparungen 24, also nach oben geschoben, bis die durch die Anlagekanten 241 und 242 auf die Anlageflächen 121 und 122 bzw. Nuten 121 und 122 eine Gegenkraft ausübt, die der Einschubrichtung entgegenwirkt.

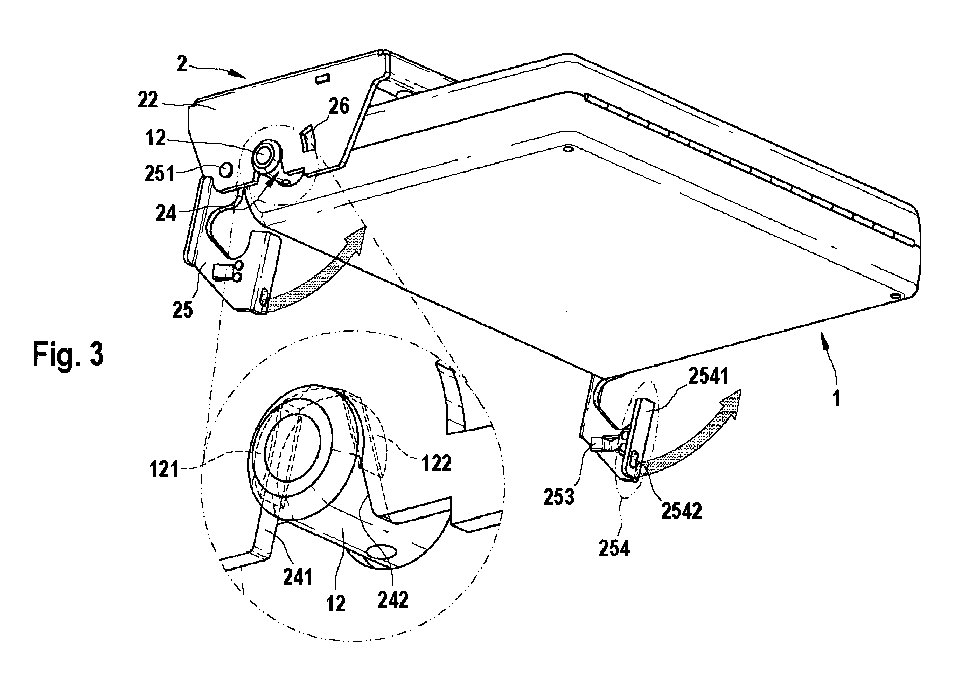

Zur Fixierung und Halterung der Anzeigeeinheit 1 in dieser Position dienen Spannehebel 25, die über jeweils ein Gelenk 251 schwenkbar an den Aufnahmeelementen 22 und 23 angeordnet sind. Die Spannhebel 25 sind in einer Ebene parallel zu den Aufnahmeelementen 22, 23 schwenkbar. Die Spannhebel 25 weisen eine Kulisse 252 auf, welche wiederum einen ersten, dem Gelenk 251 zugewandten Endabschnitt 2521 aufweist, der der Fixierung der Achsenabschnitte 12 in den Aussparungen 24 dient. Dieser Endabschnitt 2521 der Kulisse 252 ist im Wesentlichen kreisbogenförmig ausgestaltet, wobei der Radius des Kreisbogens im Wesentlichen dem Radius der Achsenabschnitte 12 entspricht. Wird der Spannheben 25 entlang der Pfeilrichtung (Figur 3) geschwenkt, wird der erste Endabschnitt 2521 der Kulisse 252 von unten gegen den Achsenabschnitt 12 gedrückt und dadurch der Achsenabschnitt 12 in die Aussparung 24 gepresst. Durch die keilförmige Ausgestaltung der Aussparung 24 sowie der entsprechenden Anlageflächen 121 und 122 der Achsenabschnitte 12 wird der Achsenabschnitt 12 somit in der Aussparung verkeilt und fixiert. Ein Spiel des Achsenabschnitts 12 in der Aussparung 24 und damit evtl. Klappergeräusche werden dadurch vermieden.

Der Spannhebel 25 weist einen Federsteg 253 auf, der beim Zuklappen des Spannhebels entlang der Pfeilrichtung in Figur 3 in eine korrespondierende weitere Aussparung 26 des Halteelements 22 bzw. 23 einschnappt und so den Spannhebel 25 im geschlossenen Zustand arretiert. Damit ist die Anzeigeeinheit 1 sicher in der Haltevorrichtung 2 befestigt.

Der Spannhebel 25 weist an seinem dem Gelenk 251 abgewandten Ende einen hakenförmigen Fortsatz 254 auf, der im geöffneten Zustand des Spannhebels 25 nach oben offen ist. Der Fortsatz 254 dient zum einen dem Verspannen des Spannhebels 25.

Dazu weist der Fortsatz 254 einen abgekanteten Bereich 2541 auf, der senkrecht zur Schwenkrichtung steht und im zugeklappten Zustand im Wesentlichen parallel zum Halteelement 21 liegt. Der abgekantete Bereich 2541 weist dazu eine Bohrung 2542 auf, durch die eine Spannschraube hindurchgeführt werden kann. Diese Spannschraube greift in ein Gewinde 211 des Halteelements 21 ein, so dass der Spannhaken 25 durch anziehen der Spannschraube entlang der Pfeilrichtung zum Halteelement 21 gezogen wird. Dies dient einerseits einer zusätzlichen Sicherung des Spannhebels 25 im geschlossenen Zustand, zudem kann auch ein eventuelles Spiel bzw. Toleranzen bei der Fertigung der V-förmigen Aussparung 24 der Halteelemente 22, 23 und/oder der Nuten bzw. Anlageflächen 121 und 122 der Achsenabschnitte 12 ausgeglichen werden.

Der hakenförmige Fortsatz 254 dient ferner auch der Ablage der Anzeigeeinheit 1 zu Montagezwecken. So können die Achsenabschnitte 12 in die aufgeklappten Spannhaken 25 eingelegt werden, wo sie durch den hakenförmigen Fortsatz 254 gehalten werden. Beispielsweise kann die Anzeigeeinheit 1 in dieser Stellung verkabelt und die Kabel verdeckt verlegt werden. Die Anzeigeeinheit 1 wird dann erst anschließend in ihrer Endposition mittels der Spannhebel 25 fixiert.

Die Kulisse 252 der Spannhaken 25 ist derart ausgebildet, dass die Achsenabschnitte 12 der Anzeigeeinheit 1, sofern diese in den hakenförmigen Fortsätzen 254 lagert, bei Schwenken der Spannhaken 25 in deren Schließstellung, also entlang der Pfeilrichtung in Figur 3, selbsttätig entlang der Kulisse in deren Endabschnitt 2521 und ferner bei weiterem Schwenken der Spannhaken 25 automatisch in die Aussparungen 24 geführt werden. Dies erleichtert weiter die Montage der Anzeigeeinheit 1. Dazu weißt die Kulisse 252 in ihrem mittleren Bereich zwischen hakenförmigem Fortsatz und ihrem Endabschnitt 2521 einen im Wesentlichen glatten und geraden Verlauf auf. Bei Verschwenken des Spannhebels 25 tritt eine Überhöhung des hakennahen Bereichs der Kulisse 252 gegenüber deren Endabschnitt auf 2521, so dass das beschriebene Gleiten der Achsenabschnitte 12 in Richtung des Endabschnitts 2521 auftritt.

## Patentansprüche

1. Haltevorrichtung (2) zum Einbau einer Anzeigeeinheit (1), mit einem Halteelement (21) und mit mit dem Halteelement verbundenen Aufnahmeelementen (22, 23), welche im wesentlichen keil- oder V-förmige Aussparungen (24) aufweisen, die zur Aufnahme von entsprechend keilförmig ausgebildeten Achsenabschnitten (12) der Anzeigeeinheit (1) dienen.

2. Haltevorrichtung (2) nach Anspruch 1, **gekennzeichnet durch** schwenkbar gelagerte Spannhebel (25) zum Verspannen der Achsenabschnitte (12) in den Aussparungen (24) durch Ausüben einer Kraft auf die Achsenabschnitte (12) im Wesentlichen in Richtung der Verjüngung der keilförmigen Aussparungen (24).

3. Haltevorrichtung (2) nach Anspruch 2, **gekennzeichnet durch** an den Spannhebeln (25) angeordnete Rastfedern (253), welche bei Zuklappen der Spannhebel (25) in weiteren Aussparungen (26) der Aufnahmeelemente (22, 23) verrasten.

4. Haltevorrichtung (2) nach einem der Ansprüche 2 oder 3, **gekennzeichnet durch** Mittel zum zusätzlichen Verspannen der Spannhebel (25), insbesondere zum Verschrauben der Spannehebel (25) gegen das Halteelement (21).

5. Haltevorrichtung (2) nach einem der Ansprüche 2 bis 4, **gekennzeichnet durch** hakenförmige Fortsätze (254) der Spannhebel (25) an deren ihrer Lagerung (251) entgegengesetzten Enden zur vorübergehenden Halterung der Anzeigeeinheit (1), insbesondere für Montagezwecke.

6. Anzeigeeinheit (1) zur Montage in einer Haltevorrichtung (2) nach einem der vorhergehenden Ansprüche, **gekennzeichnet durch** Achsenabschnitte (12) mit keil- oder V-förmig angeschrägten Bereichen zum Einbringen in entsprechend keil- oder V-förmige Aussparungen (24) der Haltevorrichtung (2).

7. Anordnung zur Montage einer Anzeigeeinheit (1) umfassend eine Haltevorrichtung (2) nach einem der Ansprüche 1 bis 5 und eine Anzeigeeinheit (1) nach Anspruch 6.

## Claims

1. Holding device (2) for mounting a display unit (1), with a holding element (21) and with receiving elements (22, 23) which are connected to the holding element and have substantially wedge- or V-shaped recesses (24) which serve to receive spindle sections (12), which are of correspondingly wedge-shaped design, of the display unit (1).

2. Holding device (2) according to Claim 1, **characterized by** pivotably mounted clamping levers (25) for securing spindle sections (12) in the recesses (24) by exertion of a force on the spindle sections (12) substantially in the direction in which the wedge-shaped recesses (24) taper.

3. Holding device (2) according to Claim 2, **characterized by** latching springs (253) which are arranged on the clamping levers (25) and latch further recesses (26) of the receiving elements (22, 23) when the clamping levers (25) are closed.

4. Holding device (2) according to either of Claims 2 and 3, **characterized by** means for additionally securing the clamping levers (25), in particular for screwing the clamping levers (25) against the holding element (21).

5. Holding device (2) according to one of Claims 2 to 4, **characterized by** hook-shaped extensions (254) of the clamping levers (25) at their ends opposite their mounting (251) for temporarily supporting the display unit (1), in particular for installation purposes.

6. Display unit (1) for installing in a holding device (2) according to one of the preceding claims, **characterized by** spindle sections (12) having regions which are bevelled in a wedge-or V-shaped manner, for introducing into correspondingly wedge-or V-shaped recesses (24) of the holding device (2).

7. Arrangement for installing a display unit (1), comprising a holding device (2) according to one of Claims 1 to 5 and a display unit (1) according to Claim 6.

## Revendications

1. Dispositif de retenue (2) pour l'installation d'une unité d'affichage (1), comprenant un élément de retenue (21) et des éléments de réception (22, 23) associés à l'élément de retenue, qui présentent des évidements (24) essentiellement en forme de coin ou de V qui servent à recevoir des portions d'axe (12) de l'unité d'affichage (1) réalisées de manière correspondante en forme de coin.

2. Dispositif de retenue (2) selon la revendication 1, **caractérisé par** des leviers de serrage (25) montés de manière pivotante pour le serrage des portions d'axe (12) dans les évidements (24) par l'application d'une force sur les portions d'axe (12) essentiellement dans la direction du rétrécissement des évidements (24) en forme de coin.

3. Dispositif de retenue (2) selon la revendication 2, **caractérisé par** des ressorts d'encliquetage (253) disposés sur les leviers de serrage (25), lesquels s'encliquètent lors du rabattement des leviers de serrage (25) dans d'autres évidements (26) des éléments de réception (22, 23).

4. Dispositif de retenue (2) selon l'une quelconque des revendications 2 ou 3, **caractérisé par** des moyens pour le serrage supplémentaire des leviers de serrage (25), notamment pour le vissage des leviers de serrage (25) contre l'élément de retenue (21).

5. Dispositif de retenue (2) selon l'une quelconque des revendications 2 à 4, **caractérisé par** des saillies en forme de crochet (254) des leviers de serrage (25) à leurs extrémités opposées à leur support sur palier (251) pour la fixation temporaire de l'unité d'affichage (1), en particulier à des fins de montage.

6. Unité d'affichage (1) pour le montage dans un dispositif de retenue (2) selon l'une quelconque des revendications précédentes, **caractérisée par** des portions d'axe (12) avec des régions biseautées en forme de coin ou de V, pour l'introduction dans des évidements correspondants (24) en forme de coin ou de V du dispositif de retenue (2).

7. Agencement pour le montage d'une unité d'affichage (1) comprenant un dispositif de retenue (2) selon l'une quelconque des revendications 1 à 5, et une unité d'affichage (1) selon la revendication 6.
